# EUROPEAN PATENT APPLICATION

(11) **EP 4 194 372 A1**
(43) Date of publication of application: **14.06.2023**
(21) Application number: 22211177.5
(22) Date of filing: 02.12.2022
(51) Int. Cl.: B65G 17/32

(54) **MOVEMENT SYSTEM FOR CONTAINER-RETAINING DEVICES AND TRANSPORT EQUIPMENT FOR RETAINING AND TRANSPORTING A CONTAINER**

(30) Priority: 09.12.2021 IT 202100030902
(71) Applicant: Azionaria Costruzioni Macchine Automatiche A.C.M.A. S.p.A., 40131 Bologna (IT)
(72) Inventor: MATRA', Luca, I-40131 BOLOGNA (BO) (IT); RIGHETTI, Marco, I-40131 BOLOGNA (BO) (IT)
(74) Representative: Porta & Consulenti Associati S.p.A.

(57) **Abstract**

A movement system (20) for container-holding devices comprises at least one movement mechanism (21) configured to be associated with a respective retaining device (12), wherein each movement mechanism (21) comprises: a slide (23) slidingly mounted on a rail (24) and movable along a respective radial gripping direction; an actuation body (28) having a drive portion (31) connected to the slide (23), an actuation portion (32) configured to receive an actuation force from a linear actuator (100), and a transmission portion (33) interposed between the actuation portion (32) and the drive portion (31). The transmission portion (33) is rotatably hinged about a transmission axis (X1) perpendicular to the radial gripping direction and contained in a radial plane. The drive portion (33) is connected to said slide (23) so that a translation in the radial direction of the drive portion (31) causes a corresponding translation of the slide (23) in the same radial direction and a translation in the axial direction of the drive portion (31) does not cause any translation of the slide (23).

## Description

The present invention refers to a movement system for container-holding devices and transport equipment for retaining and transporting a container.

The retaining devices of a container are used in transport equipment for retaining and transporting a product according to a predetermined orientation to allow filling, capping, labelling and/or other processing on the container while the transport equipment and the container are moving along an automated line.

Transport equipment, also known as "puck" or "puck carrier", is typically used in automated production lines to transport containers along paths of the production lines.

The transport equipment with the container travels along the path of the automated production line and crosses one or more processing stations where different operations are performed, during which for example the container can be filled with one or more materials, the container can be subjected to pre-filling and/or post-filling procedures or treatments, the container can be closed with a cap affixed thereto, one or more labels can be applied to the container and many other operations. When some or all of the processing have been completed, the transport equipment and container are moved to an exit area, the container is removed from the transport equipment, and the transport equipment is redirected to an entry area to receive a new container and start over with the path of the automated production line.

The retaining devices have the function of retaining the containers in preestablished positions during their transport along the paths of the production line, so as to present them suitably oriented to the operating station(s).

The Applicant has noted that the insertion and subsequent removal of the container from the transport equipment requires the retaining devices to be moved at least between a position of mutual approach in which they grasp and retain the container and a position of mutual distancing in which they are spaced apart and allow the container to be extracted.

Document EP0501372A2 describes a container carrier that can be used with a variety of containers. Pairs of container carrying elements are arranged inside a supporting body that accommodates a container. A pair of retaining elements are each arranged facing each other within the supporting body. Each retaining element has a base body that is slidable with respect to the supporting body and provided with indented side walls engaging with respective indentations pushed by springs against the side walls of the base body. The coupling between the indented sidewalls and the indentations is such as to allow a sliding in the radially outward direction of the base body and to oppose a sliding in the radially inward direction of the base body. By introducing a T-shaped manoeuvring tool into an opening of the base body of the retaining element it is possible to pull the base body by sliding it in a radially outward direction, spacing apart the retaining elements from each other. After positioning the container between the radially spaced apart retaining elements, in holes provided at each base body, respective struts are introduced that unlock the coupling between the indented side walls and the indentations allowing the movement of the retaining elements towards the container until it is contacted. By removing the struts, the side surfaces of the base body and the indentations return to mutual coupling, locking the retaining elements in place.

Document US4159762A describes an apparatus for transferring containers of different sizes along a predetermined path comprising a housing, gripping means comprising a pair of first and second gripping elements connected to said housing which are movable between a gripping position in which a container is firmly and positively grasped, and a non-gripping position in which the container can be freely shifted between said gripping elements. The gripping elements are mounted on slides slidable in the radial direction to which cam followers are connected. The apparatus moves along a predetermined path along which sliding guides are provided that engage the cam followers. These sliding guides have a diverging portion and a converging portion. When the cam followers run along the sliding guides, the cam followers move away from each other in the diverging portion and move the slides and the gripping elements away from each other (allowing the insertion of a container between the gripping elements) and the cam followers move towards each other in the diverging portion and move the slides and the gripping elements towards each other (grasping the inserted container).

The Applicant has noted that movement systems of the retaining devices such as the one described in EP0501372A2 require a sequence of operations that may involve a non-negligeable amount of time for inserting and removing a container from the transport equipment. This time waste is mainly given by the time required for an operator to insert the T-shaped manoeuvring tool inside the slide, exert a pulling force on the T-shaped manoeuvring tool and to insert the struts inside the holes of the base body.

The Applicant has further noted that movement systems of the retaining devices such as the one described in US4159762A, although presenting shorter times for inserting and removing a container from the transport equipment, may have limitations in the sizes of the container to be retained, as the maximum and minimum distance between the retaining devices is a function of the mutual distance between the sliding guides respectively in the diverging portion and in the converging portion.

The Applicant has also noted that movement systems of the retaining devices such as the one described in EP0501372A2 and at least in part such as the one described in US4159762A, require manoeuvring spaces around the transport equipment to allow the movement of the retaining devices between the position of mutual approach and the position of mutual distancing.

The Applicant has therefore felt the need to make available a movement system for retaining devices for a container that requires limited times for the insertion and removal of a container from the transport equipment.

The Applicant has also felt the need to make available a movement system for container-holding devices that allows the positioning of containers of sizes also very different from each other.

The Applicant has still felt the need to make available a movement system for container-holding devices that does not require manoeuvring spaces radially external to the transport equipment.

The Applicant has realised that in order to place containers of also very different sizes onto a transport equipment, the movement system for the retaining devices should allow the retaining devices to move between a radially outward position of maximum mutual distancing and a radially inward position of maximum mutual approach and to be able to contact and retain a container both in the radially outward position of maximum mutual distancing and in the inward position of maximum mutual approach.

The Applicant has also realised that the use of one or more external actuators that perform a single movement to drive the movement system in such a way that the movement system radially moves the retaining devices away from or towards each other, would allow to reduce or in any case contain the times necessary to move the retaining devices away from and towards each other and therefore the times necessary for the insertion and removal of a container from the transport equipment.

The Applicant has also realised that by letting such actuator(s) external to the movement system act along axial directions, it would be possible to reduce or eliminate the need to have spaces radially external to the transport equipment to allow such external actuators to drive the movement system.

The Applicant has therefore found that by providing the movement system of the retaining devices with a mechanism capable of transforming a movement in the axial direction into a movement in the radial direction, it would be possible to impart an axial movement to a first component of the movement system and transform it into a radial movement of a second component of the movement system. By rigidly connecting a retaining device to a respective second component of the movement system, each retaining device could be moved in the radial direction acting with a respective mechanical actuator substantially only in the axial direction on the first component of the movement system.

The present invention therefore concerns, in a first aspect thereof, a movement system for container-holding devices.

Preferably, at least one movement mechanism configured to be associated with a respective retaining device is provided.

Preferably, each movement mechanism comprises a slide slidingly mounted on a rail and movable along a respective radial gripping direction.

Preferably, each movement mechanism comprises an actuation body having a drive portion connected to said slide, an actuation portion configured to receive an actuation force from a linear actuator, and a transmission portion interposed between the actuation portion and the drive portion.

Preferably, the transmission portion is rotatably hinged about a transmission axis perpendicular to said radial gripping direction and contained in a radial plane.

Preferably, the drive portion is connected to said slide so that a translation in the radial direction of the drive portion causes a corresponding translation of the slide in the same radial direction and a translation in the axial direction of the drive portion does not cause any translation of the slide.

The present invention further concerns, in a second aspect thereof, a transport equipment for retaining and transporting a container.

Preferably, a support base for a container is provided.

Preferably, a plurality of retaining devices arranged radially around said support base and movable along respective radial gripping directions between a radially outermost position and a radially innermost position are provided.

Preferably, a movement mechanism of a movement system according to the first aspect of the present invention is associated with each retaining device.

The transmission portion can be rotated by axially translating the actuation portion with a linear actuator.

Since the drive portion is connected to the slide such that a translation in the radial direction of the drive portion causes a corresponding translation of the slide in the same radial direction and a translation in the axial direction of the drive portion does not cause any translation of the slide, the slide and therewith the relative retaining device can be translated in the radial direction by opening and closing the retaining devices on a container.

The Applicant has found that in this way, by translating the actuation portion with a linear actuator acting in axial direction, it is possible to move the retaining device without necessarily having to provide for spaces radially around the transport equipment dedicated to the movement of the retaining devices, allowing to minimize the space occupied by the automated production line.

The Applicant has also found that in this way with a single actuation of the linear actuator it is possible to move the retaining devices away from and/or towards the container to be retained, minimizing the times necessary for the insertion and removal of the containers.

Furthermore, the Applicant has found that in this way the entire excursion of the retaining devices can be used for the insertion of a container, allowing the same transport equipment to be used for the transport of individual containers also having very different sizes from one another.

The term "radial" in the present description and in the subsequent claims means a magnitude, an extension or a direction measured along a direction that extends along a plane parallel to a support base for the container. If used with reference to a movement system for container-holding devices or to a part thereof, the term "radial" is to be intended relatively to the disposition of the movement system with respect to the support base of the transport equipment when the movement system is integrated in the transport equipment. A radial direction is also parallel to a horizontal axis. This horizontal axis is intended when the movement system and/or the transport equipment are in use and substantially coincide with an axis parallel to the floor on which the plant rests.

The terms "axial" and "axially" mean references/magnitudes arranged/measured or extending in a direction substantially perpendicular to a plane parallel to a support base for the container. If used with reference to a movement system for container-holding devices or to a part thereof, the terms "axial" and "axially" are to be intended relatively to the disposition of the movement system with respect to the support base of the transport equipment when the movement system is integrated in the transport equipment. An axial direction is also parallel to a vertical axis. This vertical axis is intended when the movement system and/or the transport equipment are in use and substantially coincide with an axis perpendicular to the floor on which the plant rests. An axial direction is also perpendicular to a radial direction.

The terms "radially inward/outward" respectively mean a position closer to or farther away from a support base on which the container to be transported is supported. If used with reference to a movement system for container-holding devices or to a part thereof, the terms "radially inward/outward" are to be intended relatively to the disposition of the movement system with respect to the support base of the transport equipment when the movement system is integrated in the transport equipment. A radially outward direction is opposite to a radially inward direction.

The term "angular direction" means a curved direction, preferably circular or semicircular, around an axis of rotation.

In at least one of the above aspects, the present invention may exhibit at least one of the preferred features or a combination of preferred features described below.

Preferably, the axial distance between the slide and the transmission axis is fixed during the translation of the slide.

Preferably, said actuation portion comprises an actuation end configured to receive an actuation force.

Preferably, the actuation end is configured to receive an axially directed actuation force.

Preferably, the actuation end is movable along a first axial direction directed towards a supporting frame for the movement mechanism.

Preferably, a linear actuator is provided for each actuation mechanism.

Preferably, said linear actuator is configured to push in said first axial direction the actuation portion of the actuation body.

Preferably, said linear actuator is configured to push in said first axial direction the actuation end of the actuation portion.

Preferably, said actuation end is spaced from said transmission axis so as to define a not-null actuation arm for an axially directed actuation force.

Preferably, said actuation arm is measured along a radial direction.

Preferably, a movement along the first axial direction of the actuation end causes a rotation of the transmission portion in a first angular direction.

Preferably, a rotation of the transmission portion in a first angular direction causes a movement of the drive portion.

Preferably, said movement of the drive portion comprises a first component directed in a radially outward direction and a second component directed in an axial direction.

Preferably, the transmission portion is rotatable about said transmission axis between a first angular position and a second angular position and between said second angular position and said first angular position.

Preferably, a rotation of the transmission portion about said transmission axis between the first angular position and the second angular position takes place along said first angular direction.

Preferably, a rotation of the transmission portion about said transmission axis between the second angular position and the first angular position takes place along a second angular direction opposite the first angular direction.

Preferably, the first angular position of the transmission portion corresponds to a radially inward position of the slide.

Preferably, the first angular position of the transmission portion corresponds to the radially innermost position of the slide.

Preferably, the second angular position of the transmission portion corresponds to a radially outward position of the slide.

Preferably, the second angular position of the transmission portion corresponds to the radially outermost position of the slide.

Preferably, the angular distance between the first angular position and the second angular position is comprised between 10° and 170°.

Preferably, the angular distance between the first angular position and the second angular position is comprised between 30° and 120°.

Preferably, the angular distance between the first angular position and the second angular position is comprised between 45° and 100°.

Preferably, the angular distance between the first angular position and the second angular position is comprised between 45° and 75°.

Preferably, the angular distance between the first angular position and the second angular position is about 55°.

Preferably, said movement mechanism comprises a pusher.

Preferably, said pusher is configured to permanently generate a thrust force on said slide directed in a radially inward direction.

Preferably, said pusher is configured to indirectly generate said thrust force on said slide.

Preferably, said rotation of the transmission portion in the first angular direction takes place in contrast to the thrust force exerted by said pusher.

Preferably, said movement along the first axial direction of the actuation end takes place in contrast to the thrust force exerted by said pusher.

Preferably, said pusher exerts a mechanical moment on the transmission portion.

Preferably, said pusher exerts a mechanical moment directly on the transmission portion.

Preferably, said mechanical moment is directed in a second angular direction opposite to the first angular direction.

Preferably, a movement along the first axial direction of the actuation end exerts a mechanical moment on the transmission portion in the first angular direction.

Preferably, the mechanical moment exerted by the movement along the first axial direction of the actuation end is greater than the mechanical moment exerted by said pusher.

Preferably, a gear wheel rotatable about said transmission axis and rotatably coupled to the transmission portion of the actuation body is provided.

Preferably, a rack geared to said gear wheel is provided.

Preferably, said rack develops along a radial direction.

Preferably, said rack is parallel to the rail of the slide.

Preferably, said pusher is connected to the rack geared to said gear wheel.

Preferably, said pusher exerts a permanent thrust action directed in the radially inward direction on said rack.

Preferably, a rotation of the transmission portion in the first angular direction causes a translation in the radially outward direction of the rack.

Preferably, a translation in the radially inward direction of the rack causes a rotation of the transmission portion in the second angular direction.

Preferably, a rotation of the transmission portion in the first angular direction corresponds to a rotation in the first angular direction of said gear wheel.

Preferably, a translation in the radially outward direction of the rack takes place in contrast to the thrust force exerted by said pusher.

Preferably, said slide comprises a housing seat.

Preferably, said drive portion comprises a free end.

Preferably, said free end of the drive portion is inserted into said housing seat.

Preferably, said free end of the drive portion is axially movable with respect to said housing seat.

Preferably, a displacement in the radial direction of said free end of the drive portion causes a displacement in the radial direction of the housing seat.

Preferably, a movement of the free end of the drive portion is caused by a movement of the drive portion.

Preferably, said housing seat comprises a first shoulder and a second shoulder radially spaced from each other.

Preferably, said free end of the drive portion is inserted between said first and second shoulder.

Preferably, said free end of the drive portion is axially slidable with respect to said first shoulder and second shoulder.

Preferably, said free end of the drive portion is radially in contact with said first shoulder and said second shoulder.

Preferably, said free end of the drive portion comprises an annular body rotatable about an axis of rotation parallel to the transmission axis.

Preferably, a diameter of said annular body coincides with a radial distance between said first and second shoulder.

Preferably, said actuation end of the actuation body comprises an annular body rotatable about an axis of rotation parallel to the transmission axis.

Further characteristics and advantages of the present invention will become clearer from the following detailed description of a preferred embodiment thereof, with reference to the appended drawings and provided by way of indicative and non-limiting example, in which:
- Figure 1 is a perspective view of a transport equipment for retaining and transporting a container in accordance with an aspect of the present invention;
- Figures 2 and 3 are views from above of the transport equipment of Figure 1 in two different operating configurations; it is a perspective view of the equipment of Figure 1 in a second condition and with some parts removed to better highlight others;
- Figure 4 is a perspective view of a movement system for retaining devices in accordance with an aspect of the present invention;
- Figures 5 and 6 are perspective views of the movement system for retaining devices of Figure 4 in two different operating configurations and with some details removed to better highlight others; and
- Figure 7 is a schematic perspective view of the transport equipment of Figure 1 in a particular operating configuration.

A transport equipment for retaining and transporting a container in accordance with an aspect of the present invention has been indicated as a whole with reference numeral 10.

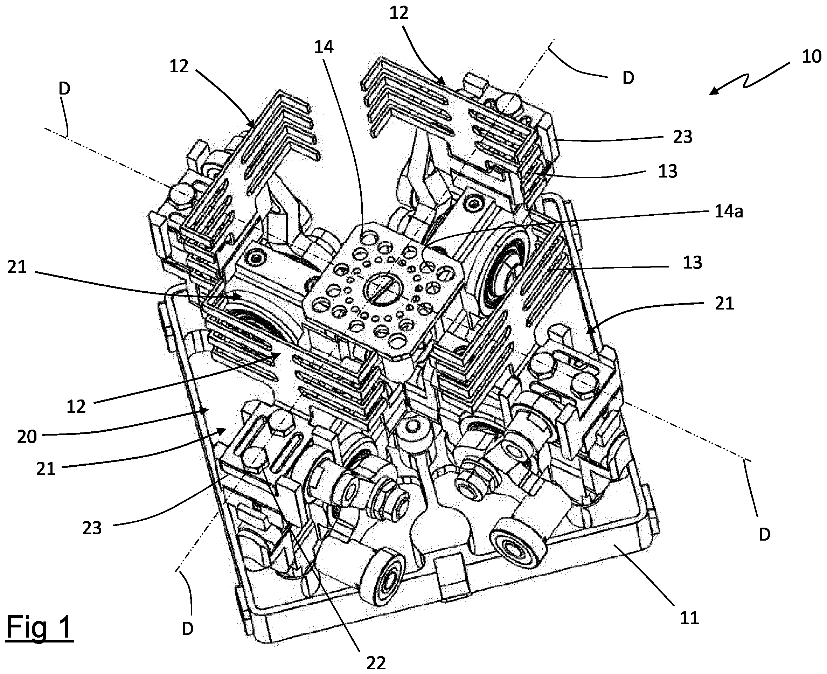

As shown in Figure 1, the equipment 10 comprises a supporting frame 11 to which a carriage (not illustrated) configured to be inserted in a track of a path of an automated production line is connected. The carriage can move autonomously along the track or it can move drivingly to follow the track.

In the event that the carriage is autonomously movable, the carriage may comprise power supply members (not illustrated) connected to drive wheels (not illustrated) of the carriage. Such electrical movement parts may for example comprise an electric motor powered by rechargeable batteries contained in the carriage or powered directly by the track of the path of the automated production line. In the event that the carriage is not autonomously movable, the track may comprise a plurality of housing seats for the carriage that move along the track by driving the carriage into motion.

Retaining devices 12 configured to retain a container (not illustrated) during the movement of the equipment 10 along the track of the path of the automated production line are mounted on the supporting frame 11, on the opposite side with respect to the carriage.

Each retaining device 12 may comprise a contact member 13 configured to contact the outer surface of the container to be retained. In the accompanying figures, contact members 13 are shown in the form of rigid bodies on which elements of yielding material (for example, of rubber or polymers with rubber-like characteristics) configured to adapt, by deforming, to the shape of the outer surface of the container to be retained can be fitted.

In embodiments not illustrated, the contact members may be entirely made of yieldable material.

The number of retaining devices 12 is comprised between two and four, preferably equal to four.

As shown in Figure 1, the equipment comprises a support base 14 for the container to be transported.

Each retaining device 12 faces, i.e. turned towards, the support base 14.

The support base 14 is connected to the supporting frame 11 and extends axially away from the supporting frame 11. The support base 14 has a support surface 14a that lies in a radial plane.

The retaining devices 12 are continuously movable along respective radially directed and rectilinear gripping directions D.

In the preferred embodiment of the invention, four retaining devices 12 are provided, wherein the radial gripping directions D of a first pair of retaining devices 12 are aligned and coincident and wherein the radial gripping directions D of a second pair of retaining devices 12 are aligned, coincident and perpendicular to the radial gripping directions D of the first pair of retaining devices 12, as depicted in Figure 1.

The retaining devices 12 are movable along the radial gripping directions D between respective radially inward positions and respective radially outward positions.

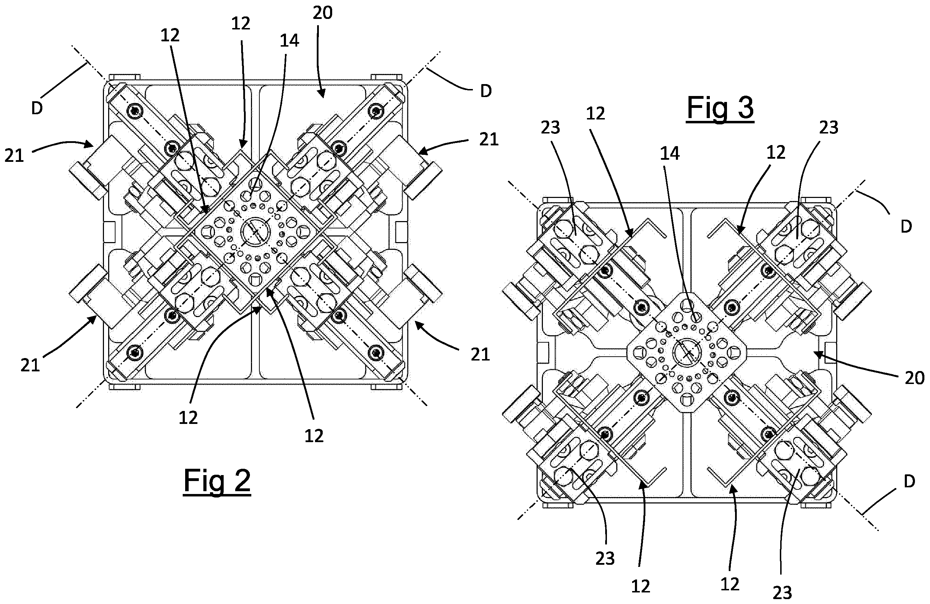

Figure 2 shows, in a top view, the retaining devices 12 in a radially innermost position that defines the minimum distance between each retaining device 12 and the support base 14. This position of the retaining devices 12 is the one which allows the smaller-sized container to be contacted and retained.

Figure 3 shows, in a top view, the retaining devices 12 in a radially outermost position that defines the maximum distance between each retaining device 12 and the support base 14. This position of the retaining devices 12 is the one which allows the larger-sized container to be contacted and retained.

Intermediate positions of the retaining devices 12 between the radially innermost position and the radially outermost position allow contacting and retaining containers having sizes that are intermediate between the smallest and the largest one.

To allow the retaining devices 12 to move along the respective radial gripping directions D, there is provided a movement system 20 for the retaining devices 12 in accordance with an aspect of the present invention.

The movement system 20 comprises a movement mechanism 21 for each retaining device 12.

In the preferred embodiment of the present invention, four movement mechanisms 21 are provided, each of which can be associated with a respective retaining device, as illustrated in Figure 1.

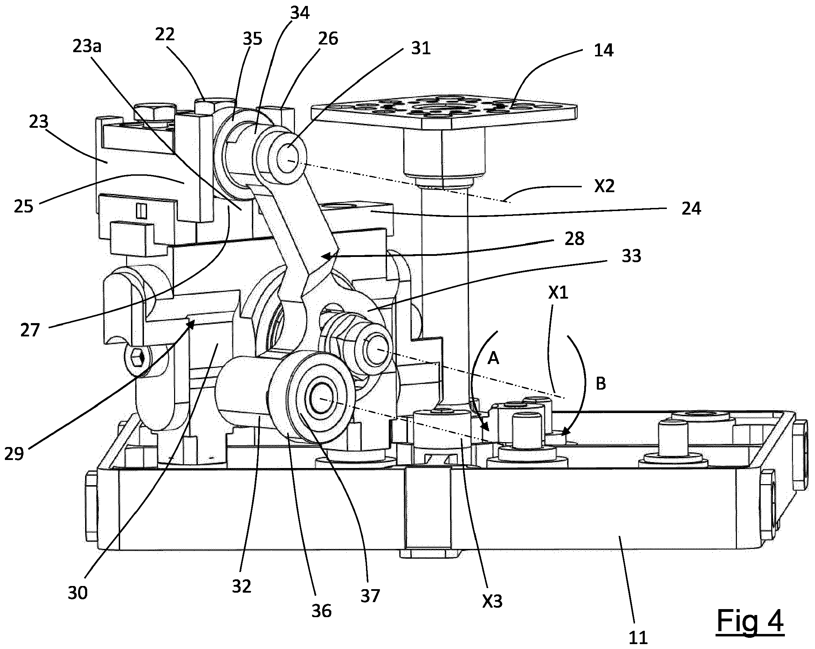

Figure 4 illustrates only one movement mechanism 21, with the remaining movement mechanisms 21 removed for illustrative clarity.

The movement mechanism 21 comprises a slide 23 slidingly coupled to a rail 24. The rail 24 is a radially arranged straight rail. The track 24 is parallel and coincident with the radial gripping direction D of the retaining device 12. The retaining device 12 is configured to be mounted on the slide 23 in a stable manner. By way of example, coupling bolts 22 may be provided that constrain the retaining device 12 to the slide 23.

The rail 24 is mounted on the supporting frame 11 through a mounting frame 29 constrained to the supporting frame 11 and to the rail 24. The mounting frame 29 is provided with a casing 30 (figure 4) having an internal cavity for housing and protecting some components of the movement mechanism 21 from the external environment (better described below).

The slide 23 comprises a housing seat 23a. The housing seat 23a comprises a first shoulder 25 and a second shoulder 26 radially spaced from each other that develop in an axial direction. As illustrated in Figure 4, the first shoulder 25 and the second shoulder 26 project perpendicular to the direction of development of the rail 24 defining a channel 27. The channel 27 is open at both ends and delimited by the first shoulder 25 and by the second shoulder 26.

The slide 23, and therewith the retaining device 12, is movable along the rail 24 in a radially inward and radially outward direction between the radially innermost position and the radially outermost position and between the radially outermost position and the radially innermost position of the retaining device 12.

The slide 23 is set in motion along the rail 24 by an actuation body 28, as illustrated in Figure 4. The actuation body is substantially L-shaped and has two free ends.

The actuation body 28 is placed externally to the casing 30 of the mounting frame 29. The actuation body 28 comprises a drive portion 31 connected to the slide 23, an actuation portion 32 configured to receive an actuation force, and a transmission portion 33 interposed between the actuation portion 32 and the drive portion 31. The actuation portion 32, the drive portion 31, and the one transmission portion 33 together define the L-shape of the actuation body 28, with the actuation portion 32 and the drive portion 31 being placed on opposite sides with respect to the transmission portion 33.

As depicted in Figure 4, the transmission portion 33 is rotatably hinged about a transmission axis X1 perpendicular to the radial gripping direction and contained in a radial plane.

The rotation of the transmission portion 33 about the transmission axis X1 causes the slide 23 to slide along the rail 24. In particular, a rotation of the transmission portion 33 in a first angular direction A causes the slide 23 to slide in a radially outward direction. A rotation of the transmission portion 33 in a second angular direction B opposite the first angular direction A causes the slide 23 to slide in a radially inward direction. The maximum rotation of the transmission portion 33 is comprised between a first angular position of the transmission portion 33 and a second angular position of the transmission portion 33. The maximum angle of rotation of the transmission portion 33 between the first angular position and the second angular position is about 55°. Likewise, the maximum angle of rotation of the transmission portion 33 between the second angular position and the first angular position is about 55°.

To allow a linear translation of the slide 23 along the rail 24 following the rotation of the transmission portion 33, the drive portion 31 of the actuation body 29 is coupled to the slide 23 such that a translation in the radial direction of the drive portion 31 causes a corresponding translation of the slide 23 in the same radial direction and a translation in the axial direction of the drive portion 31 does not cause any translation of the slide 23.

For this purpose, the drive portion 31 comprises a free end 34 inserted into the housing seat 23a of the slide 23. The free end 34 is slidable in axial direction within the housing seat 23a and is radially integral with the housing seat 23a.

A rotation of the transmission portion 33 causes a rotation of the drive portion 31 about the transmission axis X1. Such rotation of the drive portion 31 causes a translation in the radial direction and a translation in the axial direction of the free end 34 of the drive portion 31. The translation in the axial direction of the free end 34 causes a sliding in the axial direction of the free end 34 within the housing seat 23a without causing any displacement of the slide. The translation in the radial direction of the free end 34 exerts a force on the first shoulder 25 or on the second shoulder 26 of the housing seat 23a causing a translation in the radial direction of the slide 23.

In particular, a rotation in the first angular direction A of the transmission portion 33 in a first angular direction A causes a sliding in the axial direction towards the supporting frame 11 of the free end 34 of the drive portion 31 and a radially outward displacement of the free end 34 of the drive portion 31.

A rotation of the transmission portion 33 in a first angular direction A causes a sliding in the axial direction away from the supporting frame 11 of the free end 34 of the drive portion 31 and a radially inward displacement of the free end 34 of the drive portion 31.

In the embodiment illustrated in the accompanying figures, the free end 34 of the drive portion 31 is provided with an annular body 35 rotatable about an axis X2 parallel to the transmission axis X1. The annular body 35 may be a rolling bearing or a wheel hinged to the free end 34 about the axis X2.

The annular body 35 is in contact with the first shoulder 25 and the second shoulder 26 of the housing seat 23a. The annular body 35 is then slidingly inserted in the axial direction into the channel 27 defined by the first shoulder 25 and by the second shoulder 26.

To set the transmission portion 33 in rotation in the first angular direction A, the actuation portion 32 comprises an actuation end 36 configured to receive an actuation force directed along a first axial direction. The first axial direction is axially directed towards the supporting frame 11.

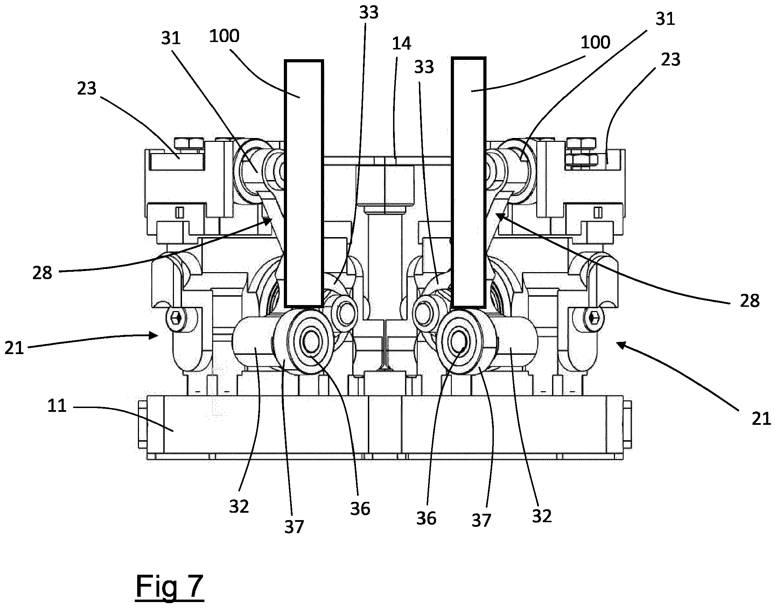

As schematically illustrated in Figure 7, a linear actuator 100 is provided for each movement mechanism 21. Each linear actuator 100 acts on a respective actuation end 36 of the actuation portion 32 of the corresponding movement mechanism 21.

Each linear actuator 100 is a pusher, i.e. any body or device capable of exerting a thrust directed in an axial direction towards the supporting frame 11 on the actuation end 36. A non-limiting example of such a linear actuator 100 may be a rod movable axially between a raised position and a plurality of lowered positions. Preferably, all linear actuators 100 are moved simultaneously and synchronously, such that all linear actuators 100 are always in the same axial position.

The linear actuator 100 contacts the actuation end 36 of the actuation portion 32 of the corresponding movement mechanism 21 by pushing it in the axial direction towards the supporting frame 11, as schematically illustrated in Figure 7.

The axial position assumed by the linear actuator 100 causes (when the linear actuator 100 is in contact with the actuation end 36) the axial position of the actuation end 36.

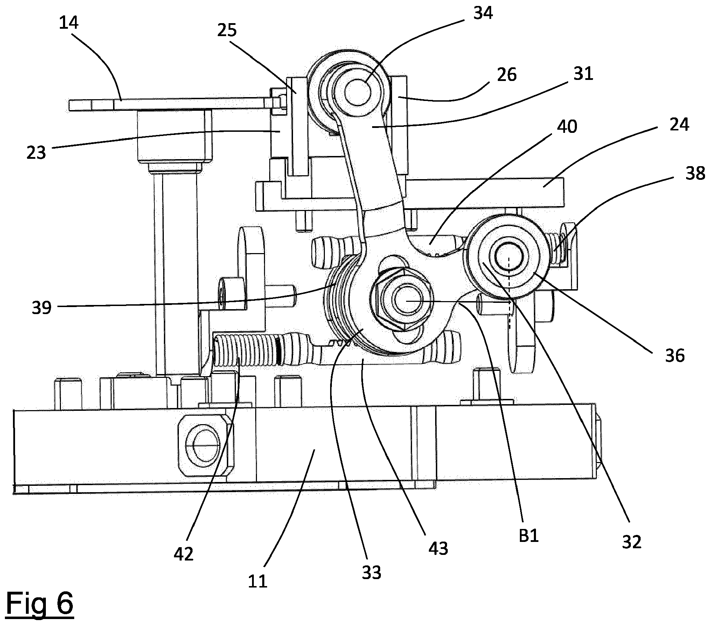

The actuation end 36 is spaced from the transmission axis X1 so as to define a not-null actuation arm B1 (Figure 6). This actuation arm B1 is defined as the projection, on a radial plane containing the transmission axis X1, of the distance separating the transmission axis X1 from the actuation end 36. This actuation arm B1 assumes different values depending on the angular position of the transmission portion 33. In any case, at any angular position of the transmission portion 33, comprised between the first angular position and the second angular position, the actuation arm B1 is always not null.

When the linear actuator 100 contacts and pushes in the first axial direction the actuation end 36, a mechanical moment is exerted on the transmission portion 33. This mechanical moment, defined as the ability of the linear actuator 100 to impart a rotation to the transmission portion 33 about the transmission axis X1, is directed in the first angular direction A.

This mechanical moment causes a rotation of the transmission portion 33 in the first angular direction A.

Each axial position of the actuation end 36 corresponds to an angular position of the transmission portion 33.

In the embodiment illustrated in the accompanying figures, the actuation end 36 of the actuation portion 32 is provided with an annular body 37 rotatable about an axis X3 parallel to the transmission axis X1 and configured to come into contact with the linear actuator 100. The annular body 37 may be a rolling bearing or a wheel hinged to the actuation end 36 about the axis X3.

When the linear actuator 100 contacts and pushes in the first axial direction the annular body 37, it is free to rotate about the axis of rotation X3. In this way, it is possible to prevent the linear actuator 100 from sliding against the actuation end 36 during its movement in the first axial direction.

In fact it should be noted that, since the actuation end 36 is connected to the transmission portion 33 (hinged around the transmission axis X1), the thrust action of the linear actuator 100 on the actuation end 36 causes a translation along the first axial direction and along a radial direction of the actuation end 36. In other words, the actuation end 36 moves along a curved trajectory. The component in the radial direction of the movement of the actuation end 36 with respect to the linear actuator 100 (moving only along an axial direction) is compensated for by a relative sliding between the actuation end 36 and the linear actuator 100 or, when the annular body 37 is provided, by a rotation of the annular body 37 about the axis of rotation X3.

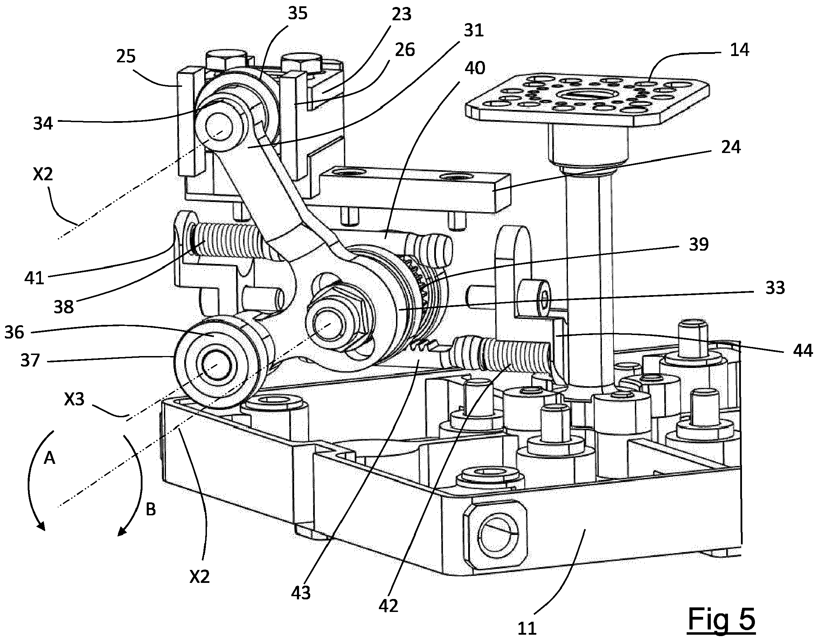

In order to set the transmission portion 33 in rotation in the second angular direction B, the movement mechanism 21 comprises a pusher 38. The pusher 38 is housed within the casing 30 of the mounting frame 29. Figures 5 and 6 illustrate a movement mechanism 21 where the casing 30 has been removed to illustrate the components contained therein.

The pusher 38 exerts, indirectly, a permanent thrust force directed in a radially inward direction on the slide 23.

In particular, the pusher 38 exerts a mechanical moment on the transmission portion 33. This mechanical moment, defined as the ability of the pusher 38 to impart a rotation to the transmission portion 33 about the transmission axis X1, is directed in the second angular direction B. The transmission portion 33, subjected to this mechanical moment exerted by the pusher 38, imparts a thrust force to the slide 23 (through the drive portion 31) directed in a radially inward direction.

In the preferred embodiment of the invention, the mechanical moment exerted by the pusher 38 on the transmission portion 33 is actuated as follows.

The movement mechanism 21 comprises a gear wheel 39 and a rack 40 geared to the gear wheel 39. The gear wheel 39 and the rack 40 are placed inside the casing 30. The gear wheel 39 is stably connected to the transmission portion 33 and is rotatable about the transmission axis X1. The rack 40 develops along a radial direction and is parallel to the rail 24, as illustrated in Figures 5 and 6. The pusher 38 acts on the rack 40 by exerting on it a thrust directed in a radially inward direction.

A translation of the rack 36 in the radially inward direction, actuated by the thrust force of the pusher element 38, corresponds to a rotation in the second angular direction B of the transmission portion 33 about the transmission axis X1. Such rotation in the second angular direction B of the transmission portion 33 is only possible when no force is exerted by the linear actuator 100 on the actuation end 36 or if the mechanical moment exerted by the linear actuator 100 on the transmission portion 33 is less than the mechanical moment exerted by the pusher 38 on the transmission portion 33.

As mentioned, when the linear actuator 100 exerts a force directed in the first axial direction on the actuation end 36, the transmission portion 33 rotates in the first angular direction A. The rotation of the transmission portion 33 causes an identical rotation of the gear wheel 39. A rotation in the first angular direction A of the gear wheel 39 about the transmission axis X1 corresponds to a translation of the rack 40 in the radially outward direction. This translation of the rack 40 in the radially outward direction takes place in contrast to the thrust force exerted by the pusher 38.

Thus, a translation of the rack 40 causes a rotation of the gear wheel 39 and a rotation of the gear wheel 39 causes a translation of the rack 40.

The pusher 38 may be a linear spring or an elastomer. Said linear spring or elastomer is placed between the rack 40 and an abutment shoulder 41 of the mounting frame 29.

As illustrated in Figures 5 and 6, a further pusher 42 may be provided housed within the casing 30 of the mounting frame 29.

The further pusher 42 exerts a further mechanical moment on the transmission portion 33 directed in the opposite direction with respect to the mechanical moment exerted on the transmission portion 33 by the pusher 38. This further mechanical moment is directed in the first angular direction A.

To this end, a further rack 43, placed inside the casing 30, is geared to the gear wheel 39. The further rack 43 develops along a radial direction and is parallel to the rail 24, as illustrated in Figures 5 and 6. The further rack 43 acts on the gear wheel 39 on the side diametrically opposite the rack 40. The further pusher 42 acts on the further rack 43 by exerting thereon a thrust directed in a radially external direction.

The force exerted by the further pusher 42 on the further rack 43 is less than the force exerted by the pusher 38 on the rack 40. The mechanical moment exerted by the pusher 38 on the transmission portion 33 is greater than the further mechanical moment exerted by the further pusher 42 on the transmission portion 33.

The function of the further pusher 42 is to prevent just one permanent force capable of generating a mechanical moment from being exerted on the transmission portion 33. The further pusher 42, by acting on the further rack 43 placed on the gear wheel 39 in a position diametrically opposite the rack 40, allows to partially balance the permanent forces that create mechanical moments directly on the gear wheel 39.

The further pusher 42 may be a linear spring or an elastomer. Said linear spring or elastomer is placed between the further rack 43 and an abutment shoulder 44 of the mounting frame 29.

To place a container in the transport equipment 10, the operator picks up a transport equipment 10 from the track of the path of the automated production line or from a storage unit.

The transport equipment 10 is presented with the retaining devices 12 in the radially innermost position.

In fact, the thrust force exerted by the respective pushers 38 on the respective slides 23, through the mechanical moments exerted by the pushing elements 38 on the transmission portions 33, places the transmission portions 33 in the first angular position and then places the slides 23 in the radially innermost position (a condition illustrated in figure 6 in relation to only one movement mechanism 21).

The operator (or an automated control unit) drives the linear actuators 100 that lower along the respective first axial directions until contacting the actuation ends 36 of the actuation portions 32. The linear actuators 100 apply an axial force on the actuation ends 36 pushing them in the respective first axial directions (as schematically illustrated in Figure 7). The force exerted by the linear actuators 100 exceeds the thrust force exerted by the pushers 38 and rotates the transmission portions 33 in the respective first angular directions A about the respective transmission axes X1.

The rotation in the first angular directions A of the transmission portions 33 causes a translation in the axial direction and a translation in the radially outward direction of the respective free ends 34 of the drive portion 31.

The translation in the axial direction of the free end 34 causes a sliding in the axial direction of the free end 34 within the housing seat 23a without causing any displacement of the slide 23. The translation in the radially outward direction of the free end 34 exerts a force on the first shoulder 25 of the housing seat 23a causing a translation in the radially outward direction of the slide 23.

The slides 23, and therewith the retaining devices 12, slide along the rails 24 towards the respective outermost radial positions. Figure 5 shows the radially outermost position of the slide 23.

The linear actuators 100 continue to move along the first axial directions so that they move the slides 23 and the relative retaining devices 12 away from each other by distances greater than the maximum extent of the container, to allow inserting the container to be transported between the retaining devices 12 and in abutment on the support base 14.

The operator then places the container on the support base 14 and acts on the linear actuators 100 to move them axially away from the supporting frame 11, i.e. in the opposite direction to the first axial direction.

As a result of the mechanical moments exerted by the pushers 38 on the respective transmission portions 33, the transmission portions 33 start rotating around the respective transmission axes X1 along the second angular directions B.

The rotation in the second angular directions B of the transmission portions 33 causes a translation in the axial direction and a translation in the radially inward direction of the respective free ends 34 of the drive portion 31.

The translation in the axial direction of the free end 34 causes a sliding in the axial direction of the free end 34 within the housing seat 23a without causing any displacement of the slide 23. The translation in the radially inward direction of the free end 34 exerts a force on the second shoulder 26 of the housing seat 23a causing a translation in the radially inward direction of the slide 23.

When the retaining devices 12 contact the outer surface of the container, the rotation of the transmission portions 33 is interrupted and the retaining devices remain in the reached position.

In this way, the container is stably retained on the support base 14 between the retaining devices 12.

## Claims

1. Movement system (20) for container-holding devices comprising:
at least one movement mechanism (21) configured to be associated with a respective retaining device (12), wherein each movement mechanism (21) comprises:
a slide (23) slidingly mounted on a rail (24) and movable along a respective radial gripping direction;
an actuation body (28) having a drive portion (31) connected to said slide (23), an actuation portion (32) configured to receive an actuation force from a linear actuator (100), and a transmission portion (33) interposed between the actuation portion (32) and the drive portion (31);
wherein the transmission portion (33) is rotatably hinged about a transmission axis (X1) perpendicular to said radial gripping direction and contained in a radial plane;
wherein the transmission portion (33) is connected to said slide (23) so that a translation in the radial direction of the drive portion (31) causes a corresponding translation of the slide (23) in the same radial direction and a translation in the axial direction of the drive portion (31) does not cause any translation of the slide (23).

2. Movement system (20) according to claim 1, wherein said actuation portion (32) comprises an actuation end (36) configured to receive an actuation force, and wherein said actuation end (34) is spaced from said transmission axis (X1) so as to define a not-null actuation arm (B1) for an axially directed actuation force.

3. Movement system (20) according to claim 1 or 2, wherein a rotation of the transmission portion (33) in a first angular direction (A) causes a movement of the drive portion (31) having a first component directed in a radially outward direction and a second component directed in an axial direction.

4. Movement system (20) according to any one of the preceding claims, comprising a pusher (38) configured to permanently generate a thrust force on said slide (38) directed in a radially inward direction.

5. Movement system (20) according to claim 3 and 4, wherein said rotation of the transmission portion (33) in the first angular direction (A) takes place in contrast to the thrust force exerted by said pusher (38).

6. Movement system (20) according to claim 4 or 5, wherein said pusher (38) exerts a mechanical moment on the transmission portion (33).

7. Movement system (20) according to any one of claims 4 to 6, comprising a gearwheel (39) rotatable about said transmission axis (X1) and rotatably coupled to the transmission portion (33) of the actuation body (28); said pusher (38) being connected to a rack (40) geared to said gear wheel (39).

8. Movement system (20) according to any one of the preceding claims, wherein said slide (23) comprises a housing seat (23a) and said drive portion (31) comprises a free end (34) inserted into said housing (23a), wherein said free end (34) of the drive portion (31) is axially movable with respect to said housing seat (23a).

9. Movement system (20) according to claim 8, wherein said housing seat (23a) comprises a first shoulder (25) and a second shoulder (26) radially spaced from each other, said free end (34) of the drive portion (31) being inserted between the first shoulder (25) and the second shoulder (26) and being axially slidable with respect to said first shoulder (25) and second shoulder (26).

10. Movement system (20) according to claim 8 or 9, wherein said free end (34) of the drive portion (31) comprises an annular body (35) rotatable about an axis of rotation (X2) parallel to the transmission axis (X1).

11. Movement system (20) according to any one of the preceding claims, wherein said actuation end (36) of the actuation portion (32) comprises an annular body (36) rotatable about an axis of rotation (X3) parallel to the transmission axis (X1).

12. Movement system (20) according to any one of the preceding claims, wherein the transmission portion (33) is rotatable about said transmission axis (X1) between a first angular position and a second angular position and between said second angular position and said first angular position and wherein the angular distance between the first angular position and the second angular position is comprised between 10° and 170°, preferably comprised between 30° and 120°, even more preferably comprised between 45° and 100°.

13. Movement system (20) according to any one of the preceding claims comprising a linear actuator (100) for each actuation mechanism (21); said linear actuator (100) being configured to push in a first axial direction the actuation portion (32) of the actuation body (28).

14. Transport equipment (10) for retaining and transporting a container, comprising:
a support base (14) for a container;
a plurality of retaining devices (12) arranged radially about said support base (14) and movable along respective radial gripping directions between a radially outermost position and a radially innermost position;
a movement system (20) according to one or more of claims 1 to 13, wherein each retaining device (12) is associated with a corresponding movement mechanism (21).
